Europäisches Patentamt

European Patent Office

Office européen des brevets

(11) Publication number: **0 074 698**
**A1**

# EUROPEAN PATENT APPLICATION

(21) Application number: **82300895.8**

(51) Int. Cl.³: **H 02 G 3/04**

(22) Date of filing: **22.02.82**

(30) Priority: **11.09.81 GB 8127496**

(43) Date of publication of application:
**23.03.83 Bulletin 83/12**

(84) Designated Contracting States:
**AT BE CH DE FR IT LI LU NL SE**

(71) Applicant: **BICC Limited**
**21, Bloomsbury Street**
**London, WC1B 3QN(GB)**

(72) Inventor: **White, Ronald Leslie Albert**
**47 Greygoose Park**
**Harlow Essex(GB)**

(72) Inventor: **Owers, Geoffrey**
**32 Priory Avenue**
**Old Harlow Essex(GB)**

(74) Representative: **Ross Gower, Edward Lewis et al,**
**BICC Limited Patents Department 38 Wood Lane**
**London W12 7DX(GB)**

(54) **An improved cable ladder.**

(57) To facilitate transportation and storage of cable ladders, the stringers 1 of a cable ladder are each of such a transverse cross-sectional shape that the cable ladder can be arranged to extend lengthwise above, and to nest between the stringers and to be supported by the rungs 2 of, another cable ladder of substantially identical construction. Preferably, each stringer 1 has a multi-stepped transverse cross-sectional shape, the distance between the inner surface of a longitudinally extending part 12 of the stringer and the central longitudinal axis of the cable ladder being greater than said distance at a neighbouring longitudinally extending part 11 of the stringer nearer the rungs 2.

Fig. 4.

AN IMPROVED CABLE LADDER

This invention relates to ladder-like structures for supporting electric cables and/or service pipes, which structures comprise a pair of elongate side members (generally and hereinafter referred to as "stringers") and, extending transversely between and secured to the stringers at spaced positions along their lengths, a plurality of elongate support members (generally and hereinafter referred to as "rungs"). Such ladder-like structures may also include coupling components such as bends for supporting electric cables and/or service pipes as the direction and/or plane in which they extend gradually changes, tee-connectors and cross-connectors, all such coupling components having, as common features, at least one pair of stringers interconnected by mutually spaced transversely extending rungs. For convenience, all such ladder-like structures and coupling components therefor will hereinafter be included in the generic expression "cable ladder".

It is an object of the present invention to provide an improved cable ladder of such a form that two or more such cable ladders of substantially identical construction can be readily stacked one on top of the other or another.

According to the invention, in the improved cable ladder each stringer is of such a transverse cross-sectional shape that the cable ladder can be arranged to extend lengthwise above, and to nest between the stringers of, another cable ladder of substantially identical construction.

Preferably, each stringer of the cable ladder has such a transverse cross-sectional shape that, when the cable ladder is nesting between the stringers of another cable ladder of substantially identical construction, the cable ladder will be supported on the rungs of the other cable ladder.

To facilitate such nesting of cable ladders of substantially identical construction, at least that portion of each stringer extending from the rungs to that longitudinal edge of the stringer which will be uppermost when the cable ladder is arranged to lie in a substantially horizontal plane, may be so inclined to the cable-supporting surfaces of the rungs that the distance between the inner surface of the stringer and the central longitudinal axis of the cable ladder increases smoothly in a direction from the rungs to said longitudinal edge of the stringer but, preferably, to provide the stringer with additional inherent strength, at least that portion of the stringer extending between the rungs and said longitudinal edge has a multi-stepped transverse cross-sectional shape, the distance between the inner surface of one longitudinally extending part of the stringer and the central longitudinal axis of the cable ladder at each step being greater than said distance at a neighbouring longitudinally extending part of the stringer.

3

The invention is further illustrated by a description, by way of example, of a preferred cable ladder with reference to the accompanying drawings, in which:-

Figure 1 is a fragmental pictorial view of the preferred cable ladder;

Figure 2 is a fragmental pictorial view of a stringer and one of the rungs of the cable ladder shown in Figure 1;

Figure 3 is an enlarged view of detail of Figure 2, and

Figure 4 is an end view of four cable ladders of the kind shown in Figure 1 nested one on top of another.

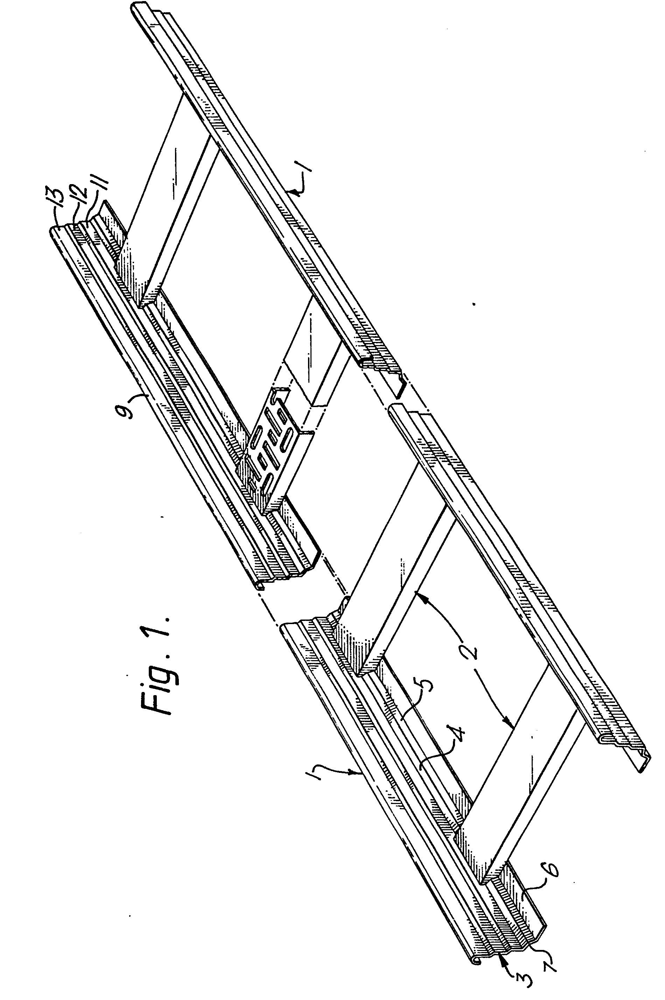

Referring to Figures 1 to 3, the cable ladder comprises two steel stringers 1 of substantially channel-shaped cross-section arranged substantially parallel to one another and, extending transversely between and secured to the stringers at spaced positions along their lengths, a plurality of steel rungs 2 each of channel-shaped cross-section. Each stringer 1 includes a base 3, a flange 9 folded over outwardly of the cable ladder, and an inwardly extending flange 6 interconnected by two adjoining longitudinally extending surfaces 4 and 5 which are inclined at obtuse angles to the base 3 and the flange 6, respectively, to form, in the outer side face of the stringer, a longitudinally extending groove 7.

That part of each stringer 1 extending between the rungs 2 and its flange 9 is divided transversely of its length by two transversely spaced, longitudinally extending steps into parts 11, 12 and 13, the distance between the inner surface of the part 13 and the central longitudinal axis of the cable ladder being greater than the distance between the inner surface of the part 12 and the central longitudinal axis of the cable ladder, and the distance between the inner surface of the part 12 and the central longitudinal axis of the cable ladder being greater than the distance between the inner surface of the part 11 and the central longitudinal axis of the cable ladder.

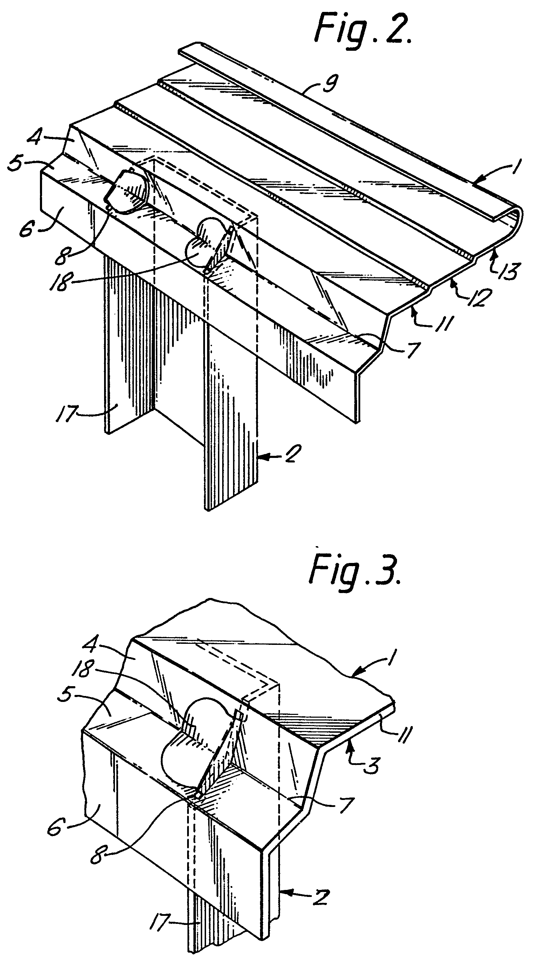

The part of each stringer 1 having longitudinally extending surfaces 4 and 5 has at each of a plurality of longitudinally spaced positions along its length a pair of longitudinally spaced, transversely extending slots 8. End parts 18 of the side wall 17 of a rung 2 protrude through a pair of slots 8 and are folded, as shown in Figures 2 and 3, to lie in the groove 7 and to lock the rung permanently to the stringer. The end faces of the rungs 2 abut the inner surfaces of the parts 11 of the stringers 1.

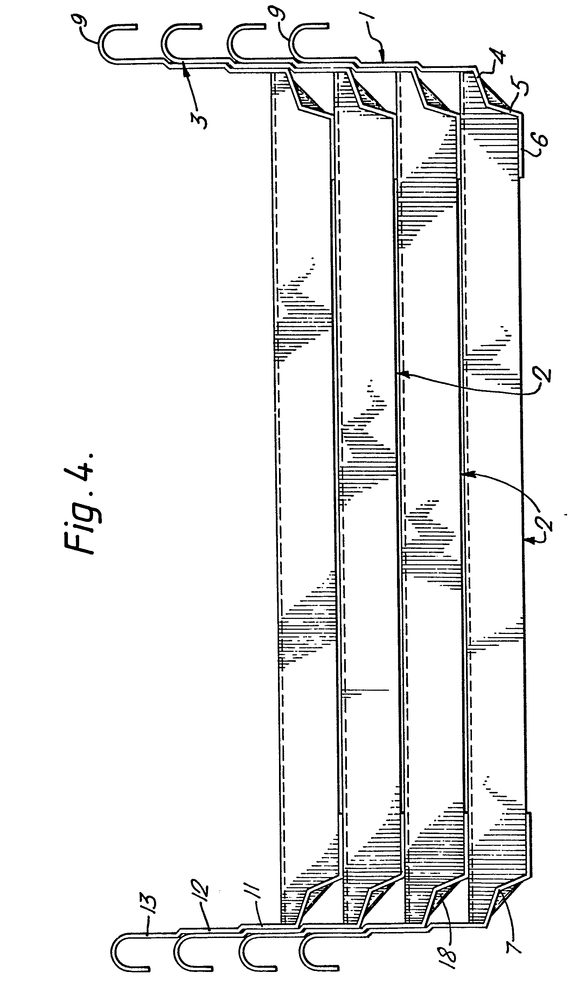

As will be seen on referring to Figure 4, when a cable ladder as shown in Figure 1 is arranged to extend lengthwise above, and to nest between the stringers 1 of, another cable ladder of substantially identical construction, the cable ladder will be supported on the rungs 2 of the underlying cable ladder with the parts 11 of its stringers engaging between the parts 12 of the stringers of the underlying cable ladder and the parts 12 of its stringers engaging between the parts 13 of the stringers of the underlying cable ladder.

The nestable cable ladder of the present invention has the important advantage that it facilitates transportation of cable ladders generally and especially when a ladder-like support structure is being erected at a site where space is limited, for example along a tunnel. Storage of cable ladders of substantially identical construction within a factory, on site or elsewhere is also facilitated because a substantial saving in space is provided.

CLAIMS:

1.      A cable ladder wherein each stringer is of such a transverse cross-sectional shape that the cable ladder can be arranged to extend lengthwise above, and to nest between the stringers of, another cable ladder of substantially identical construction.

2       A cable ladder as claimed in Claim 1, wherein each stringer of the cable ladder has such a transverse cross-sectional shape that, when the cable ladder is nesting between the stringers of another cable ladder of substantially identical construction, the cable ladder will be supported on the rungs of the other cable ladder.

3.      A cable ladder as claimed in Claim 1 or 2, wherein at least that portion of each stringer extending from the rungs to that longitudinal edge of the stringer which will be uppermost when the cable ladder is arranged to lie in a substantially horizontal plane, has a multi-stepped transverse cross-sectional shape, the distance between the inner surface of one longitudinally extending part of the stringer and the central longitudinal axis of the cable ladder being greater than the said distance at a neighbouring longitudinally extending part of the stringer nearer the rungs.

4.      A cable ladder as claimed in Claim 1 or 2, wherein at least that portion of each stringer extending from the rungs to that longitudinal edge of the stringer which will be uppermost when the cable ladder is arranged to lie in a substantially horizontal plane, is so inclined to the cable-supporting surfaces of the rungs that the distance between the inner surface of the stringer and the central longitudinal axis of the cable ladder increases smoothly in a direction from the rungs to said longitudinal edge of the stringer.

Fig. 1.

*Fig. 2.*

*Fig. 3.*

Fig.4.

**0074698**

Application number

European Patent Office

**EUROPEAN SEARCH REPORT**

EP 82 30 0895

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | H 02 G 3/04 |
| Y | DE-A-2 014 393 (NIEDAX) *Page 6, last paragraph; page 7, paragraph 1; figures 2,7* | 1,2 | |
| | --- | | |
| Y | FR-A-2 171 049 (BASSANI) *Page 2, line 39 - page 3, line 16; figure 2* | 1-3 | |
| | --- | | |
| A | DE-A-2 119 740 (PHÖNIX) *Page 9, paragraph 3, figures 1,3* | 1,4 | |
| | ----- | | |

TECHNICAL FIELDS SEARCHED (Int. Cl. ³)

H 02 G 3/00

The present search report has been drawn up for all claims

| Place of search THE HAGUE | Date of completion of the search 07-12-1982 | Examiner TIELEMANS H.L.A. |
|---|---|---|